# EUROPEAN PATENT SPECIFICATION

(11) **EP 1 749 321 B1**
(45) Date of publication and mention of the grant of the patent: **11.04.2012**
(21) Application number: 05764842.0
(22) Date of filing: 13.05.2005
(51) Int. Cl.: H01M 4/88

(54) **SYSTEM AND METHOD FOR FORMING A MEMBRANE ELECTRODE ASSEMBLY FOR FUEL CELLS**
SYSTEM UND VERFAHREN ZUR BILDUNG EINER MEMBRANELEKTRODENBAUGRUPPE FÜR BRENNSTOFFZELLEN
SYSTEME ET PROCEDE DE FABRICATION D'UN ENSEMBLE ELECTRODES A MEMBRANE POUR PILES A COMBUSTIBLE

(30) Priority: 13.05.2004 KR 2004033791; 13.05.2005 KR 2005039942
(43) Date of publication of application: 07.02.2007
(73) Proprietor: LG Chem, Ltd., 150-010 Seoul (KR)
(72) Inventor: PARK, Kyoung-Il, 602-509 Jangmi apt., Seoul 139-230 (KR); MOON, Go-Young, 315-101 Songganggreen apt., Daejeon-city 305-751 (KR); YOO, Hwang-Chan, 812-501 Yeolmaemaeul apt., Daejeon-city 305-768 (KR); LEE, Sang-Hyun, Seoul 143-220 (KR); CHUNG, Ha-Chull, 116-301 LG apt., Cheonan-city, Chungcheongnam-do 330-190 (KR); SONG, Seong-Min, Seoul 157-836 (KR); LEE, Won-Ho, 112-1005 Gangbyeon apt., Daejeon-city 302-741 (KR)
(74) Representative: HOFFMANN EITLE
(86) International application number: PCT/KR2005/001410
(87) International publication number: WO 2005/124906

(56) References cited:
- JP-A- 2000 277 123
- JP-A- 2001 307 751
- US-A- 6 136 463
- US-A- 2004 018 937

## Description

### BACKGROUND OF THE INVENTION

### (a) Field of the Invention

The present invention relates to a system for manufacturing a membrane electrode assembly (MEA) for a fuel cell.

### (b) Description of the Related Art

A fuel cell is a device for generating electric power using electrons generated during an oxidation-reduction reaction of oxygen and hydrogen. A unit cell of the fuel cell is formed by coating an anode and a cathode on both sides of an electrolyte membrane that is made of a high polymer substance and is generally called a membrane electrode assembly. Hydrogen or methanol, as a fuel, is supplied to the anode, and it reacts to generate hydrogen ions, and the hydrogen, passing the high polymer electrolyte membrane, reacts with oxygen in the cathode, thereby generating pure water. Such reactions occur in the membrane electrode assembly, and the membrane electrode assembly is manufactured by coating layers of anode catalyst material (typically, Pt or Pt/Ru) and cathode catalyst material (typically, Pt) on both sides of a high polymer membrane.

One known method for manufacturing the membrane electrode assembly is a method in which a paste is formed by mixing a catalyst material, a proton conductive binder material, and a water or alcohol group solvent, the formed paste is coated on a carbon cloth or a carbon paper, and the carbon cloth or paper coated by the paste is applied to the proton conductive electrolyte membrane through a heat welding. This method is a kind of indirect coating method, and it has a problem in that since the catalyst material is not distributed with a uniform thickness on a surface of a porous carbon cloth or a porous carbon paper when the catalyst material is coated thereon, but permeates into the porous carbon cloth or a porous carbon paper, a percentage of use of the catalyst white operating the membrane electrode assembly is decreased, and thereby an overall performance is deteriorated. In addition, since the already formed electrode layer is secondly heat-welded onto the proton conductive layer, a manufacturing process becomes complicated, and an interfacial surface of the electrolyte material and the catalyst layer is discontinuously formed.

Furthermore, another method for manufacturing the membrane electrode assembly is a method in which an electrode paste is formed by mixing a catalyst material, a proton conductive binder material, and a water or alcohol group solvent, and then coating this paste onto a surface of the proton conductive electrolyte membrane through a direct transfer coating method, such as a screen printing method. Although this method, imitating a general printing manufacturing process, is advantageous to patterning and is suitable for mass production, a swelling phenomenon may occur where a volume of the high polymer electrolyte membrane increases in all directions when the water or alcohol group solvent comes into contact with the high polymer electrolyte membrane, so that it becomes difficult to obtain a uniform coated layer, a loss of catalyst solution increases, and it becomes difficult to regulate a viscosity of the solution.

As another method for manufacturing the membrane electrode assembly, there is a wet-type method in which a slurry solution is formed by mixing a catalyst material, a proton conductive binder material, and a large quantity of a water or alcohol group solvent, and a catalyst layer is formed by spraying this slurry solution onto a gas diffusion layer or a high polymer electrolyte membrane using a spray device. Also, there is a dry-type method in which a catalyst material and a proton conductive binder material are mixed with each other without using a solvent, and a catalyst layer is formed by injecting the mixture of the catalyst material and the proton conductive binder material using an electrostatic attraction force. These methods have an advantage that a continuity of an interfacial surface and a percentage of use of the catalyst can be improved since a thin catalyst layer is formed on the gas diffusion layer or the high polymer electrolyte membrane through a direct coating method.

However, in the wet-type method, although the catalyst material and the proton conductive material can be uniformly mixed since a large quantity of solvent is used, there is a drawback that it is difficult to obtain a uniform coated layer due to a swelling of a membrane when a coating is performed directly onto the membrane. In addition, in the dry-type method, there is a problem in that it is difficult to perform a coating using the electrostatic attraction force since the membrane is an insulator and it is difficult to uniformly mix catalyst particles and the proton conductive binder material.

Therefore, a new system for manufacturing the membrane electrode assembly is needed, in which a uniform catalyst layer may be formed by uniformly spraying the catalyst solution onto the high polymer layer to improve a performance of a fuel cell and to allow mass production of the membrane.

### SUMMARY OF THE INVENTION

The present invention has been provided to solve the above-mentioned problems, and it is an object of the present invention to provide a system and a method for manufacturing a membrane electrode assembly for a fuel cell that can increase uniformity of a catalyst layer and minimize a swelling phenomenon of a high polymer electrolyte membrane by adopting devices for preheating a carrying gas and a catalyst solution.

A system for manufacturing a membrane electrode assembly for a fuel cell according to an embodiment of the present invention includes a catalyst solution preheating device, a carrying gas preheater, a cathode catalyst solution spray nozzle, and an anode catalyst solution spray nozzle. The catalyst solution preheating device preheats a cathode catalyst solution and an anode catalyst solution. The carrying gas preheater preheats a carrying gas. The cathode catalyst solution spray nozzle is supplied with the cathode catalyst solution preheated by the catalyst solution preheating device and the carrying gas preheated by the carrying gas preheater, and is configured to spray the supplied cathode catalyst solution. The anode catalyst solution spray nozzle is supplied with the anode catalyst solution preheated by the catalyst solution preheating device and the carrying gas preheated by the carrying gas preheater, and is configured to spray the supplied anode catalyst solution.

The catalyst solution preheating device may heat the cathode catalyst solution and the anode catalyst solution at a temperature in a range of 0.6*BP to 0.95*BP, where BP is a boiling point of the solvent of the catalyst solution.

The catalyst solution preheating device may include a cathode catalyst solution preheater preheating the cathode catalyst solution and an anode catalyst solution preheater preheating the anode catalyst solution.

The cathode catalyst solution preheater may heat the cathode catalyst solution at a temperature in a range of 0.6*BP to 0.95*BP, where BP is a boiling point of the solvent of the catalyst solution.

The anode catalyst solution preheater may heat the anode catalyst solution at a temperature in a range of 0.6*BP to 0.95*BP, where BP is a boiling point of the solvent of the catalyst solution.

The cathode and anode catalyst solution spray nozzles may operate to alternately spray the catalyst solution.

The carrying gas preheater may heat the carrying gas at a temperature higher than boiling points of the cathode catalyst solution and the anode catalyst solution.

The carrying gas may be one of argon, helium, nitrogen, and air.

A method for manufacturing a membrane electrode assembly for a fuel cell according to an embodiment of the present invention includes preheating the cathode catalyst solution, preheating the anode catalyst solution, preheating the carrying gas, spraying the preheated cathode catalyst solution through a cathode catalyst solution spray nozzle using the preheated carrying gas, and spraying the preheated anode catalyst solution through an anode catalyst solution spray nozzle using the preheated carrying gas.

The spraying of the preheated cathode catalyst solution and the spraying of the preheated anode catalyst solution may be alternately performed.

In the preheating cathode catalyst solution, the cathode catalyst solution may be heated at a temperature in a range of 0.6*BP to 0.95*BP, where BP is a boiling point of the solvent of the catalyst solution.

In the preheating anode catalyst solution, the anode catalyst solution may be heated at a temperature in a range of 0.6*BP to 0.95*BP, where BP is a boiling point of the solvent of the catalyst solution.

In the preheating of the carrying gas, the carrying gas may be heated at a temperature higher than the boiling points of the cathode catalyst solution and the anode catalyst solution.

### BRIEF DESCRIPTION OF THE DRAWINGS

FIG. 1 is a schematic diagram of a system for manufacturing a membrane electrode assembly for a fuel cell according to an embodiment of the present invention.
FIGs. 2 and 3 comparatively show voltage and power characteristics of a membrane electrode assembly manufactured by a system for manufacturing a membrane electrode assembly for a fuel cell according to an embodiment of the present invention and by a conventional system.

### DETAILED DESCRIPTION OF THE PREFERRED EMBODIMENTS

Hereinafter, embodiments of the present invention will be explained with reference to the drawings.

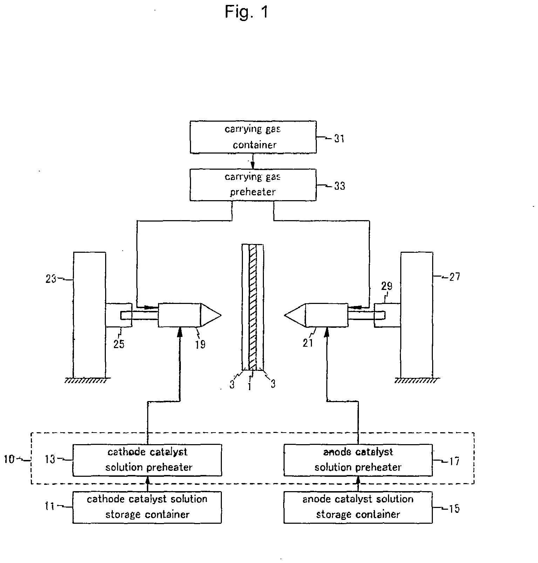

Referring to FIG. 1, a system for manufacturing a membrane electrode assembly for a fuel cell according to an embodiment of the present invention includes a catalyst solution preheating device 10 preheating a cathode catalyst solution and an anode catalyst solution.

The catalyst solution preheating device 10 is supplied with the cathode catalyst solution and the anode catalyst solution respectively from a cathode catalyst solution storage container 11 and an anode catalyst solution storage container 15, preheats the supplied solutions, and discharges the preheated solutions.

In the present embodiment, the catalyst solution preheating device 10 includes a cathode catalyst solution preheater 13, preheating the cathode catalyst solution, and an anode catalyst solution preheater 17, preheating the anode catalyst solution. However, the catalyst solution preheating device 10 can be achieved as a single preheater that is configured to separately preheat the cathode catalyst solution and the anode catalyst solution.

The cathode catalyst solution preheater 13 is supplied with the cathode catalyst solution from the cathode catalyst solution storage container 11 and preheats the supplied cathode catalyst solution. The cathode catalyst solution is a solution of a cathode catalyst material that is formed by mixing the cathode catalyst material with a solvent or by dispersing the cathode catalyst material into a solvent, and is used to form a cathode of a membrane electrode assembly of a fuel cell. For example, the cathode catalyst solution can be a known cathode catalyst solution.

The anode catalyst solution preheater 17 is supplied with the anode catalyst solution from the anode catalyst solution storage container 15 and preheats the supplied anode catalyst solution. The anode catalyst solution is a solution of an anode catalyst material that is formed by mixing the anode catalyst material with a solvent or by dispersing the anode catalyst material into a solvent, and is used to form an anode of a membrane electrode assembly of a fuel cell. For example, the anode catalyst solution can be a known anode catalyst solution.

The cathode and anode catalyst solution preheaters 13 and 17 can be realized by a known preheater.

The cathode and anode catalyst solution preheaters 13 and 17 may respectively preheat the cathode catalyst solution and the anode catalyst solution at a temperature lower than the boiling points of the solvents of the cathode catalyst solution and the anode catalyst solution. Solvents used for the catalyst solutions may be water or alcohol group solvents, and the alcohol group solvents may be methanol, ethanol, n-propanol, isopropyl alcohol, 1-buthanol, 2-buthanol, isobutyl alcohol, or the like. The cathode and anode catalyst solution preheaters 13 and 17 may preheat the cathode catalyst solution and the anode catalyst solution at a temperature in a range of 60% to 95% of the boiling point of the solvent of the catalyst solution, i.e., in a range of 0.6*BP to 0.95*BP, where BP is a boiling point of the solvent of the catalyst solution. If the catalyst solution is preheated at a temperature lower than 0.6*BP, a sufficient preheating effect cannot be obtained, and if the catalyst solution is preheated at a temperature higher than 0.95*BP, vaporization of the solvent may occur so that the catalyst material may block an outlet passageway of a spray nozzle.

The cathode catalyst solution preheated by the cathode catalyst solution preheater 13 is supplied to a cathode catalyst solution spray nozzle 19, and the anode catalyst solution preheated by the anode catalyst solution preheater 17 is supplied to an anode catalyst solution spray nozzle 21.

A carrying gas preheater 33 is supplied with a carrying gas from a carrying gas storage container 31 and preheats the supplied carrying gas. The carrying gas is a gas for operating the cathode and anode catalyst solution spray nozzles 19 and 21, and for example, it may be argon (Ar), helium (He), nitrogen (N2), or air.

The carrying gas preheater 33 may preheat the carrying gas at a temperature higher than the boiling points of the solvents of the catalyst solutions such that the carrying gas can evaporate the solvent of the catalyst solution simultaneously with the spraying of the catalyst solution. For example, the carrying gas preheater 33 may preheat the carrying gas at a temperature higher than or equal to a temperature corresponding to 110% of the boiling point (BP) of the solvent of the catalyst solution, i.e., 1.1*BP. Since the carrying gas is preheated at a temperature higher than the boiling point of the solvent of the catalyst solution by the carrying gas preheater 33, the catalyst material may be sprayed onto a high polymer electrolyte membrane 1 after the solvent of the catalyst solution is evaporated by the heat of the carrying gas.

The carrying gas preheated by the carrying gas preheater 33 is supplied to the cathode catalyst solution spray nozzle 19 and the anode catalyst solution spray nozzle 21.

For example, the cathode catalyst solution preheater 13, the anode catalyst solution preheater 17, and the carrying gas preheater 31 may be realized as a known preheater.

The cathode catalyst solution spray nozzle 19 is supplied with the cathode catalyst solution preheated by the cathode catalyst solution preheater 13 and the carrying gas preheated by the carrying gas preheater 31, and is configured to spray the supplied cathode catalyst solution.

The anode catalyst solution spray nozzle 21 is supplied with the anode catalyst solution preheated by the anode catalyst solution preheater 17 and the carrying gas preheated by the carrying gas preheater 31, and is configured to spray the supplied anode catalyst solution.

The cathode catalyst solution sprayed by the cathode catalyst solution spray nozzle 19 and the anode catalyst solution sprayed by the anode catalyst solution spray nozzle 21 are coated respectively on each side of the high polymer electrolyte membrane 1 that is disposed between pattern frames 3. Accordingly, the membrane electrode assembly in which the cathode and the anode are formed on each side of the electrolyte membrane is formed.

According to an embodiment of the present invention, since the cathode catalyst solution, the anode catalyst solution, and the carrying gas are supplied to the spray nozzles after having been respectively preheated, and the preheated solution is then sprayed, a catalyst layer can be more uniformly formed and a swelling phenomenon in the electrolyte membrane can be minimized.

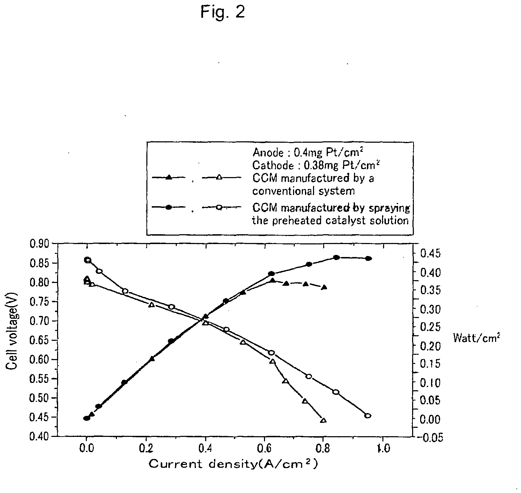

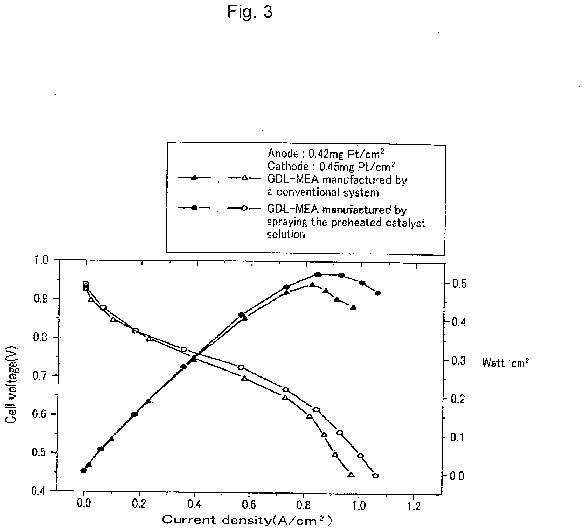

FIGs. 2 and 3 comparatively show voltage (V) and power (Watt) characteristics of a membrane electrode assembly manufactured by a system for manufacturing a membrane electrode assembly for a fuel cell according to an embodiment of the present invention and by a conventional system.

In FIGs. 2 and 3, graphs connecting "●" and "▲" illustrate relations between a current density A/cm² and a power density watt/cm², and graphs connecting "o" and "Δ" illustrate relations between the current density A/cm² and a cell voltage V. Also, in FIG. 2, "●" and "o" relate to data of a membrane electrode assembly of CCM (catalyst coated membrane) type manufactured by a system according to an embodiment of the present invention, and "▲" and "Δ" relate to data of a membrane electrode assembly of CCM type manufactured by a conventional system. Moreover, in FIG. 3, "●" and "o" relate to data of a membrane electrode assembly of a type in which a catalyst is coated on a gas diffusion layer (GDL) manufactured by a system according to an embodiment of the present invention, and "▲" and "Δ" relate to data of a membrane electrode assembly of a type in which a catalyst is coated on a GDL manufactured by a conventional system.

As is already known in the art, it is advantageous that an amount of decrease of the voltage and the power density depending on an increase of a current density is small. Referring to FIGs. 2 and 3, an amount of decrease of the voltage and the power density depending on an increase of a current density in the membrane electrode assembly manufactured by a system according to an embodiment of the present invention is smaller than in the membrane electrode assembly manufactured by a conventional system, and in particular, in a relatively high current density region, a difference of amounts of decrease of the voltage and the power density is relatively great. Accordingly, the membrane electrode assembly manufactured by a system and a method according to embodiments of the present invention, i.e., the membrane electrode assembly manufactured by spraying the preheated catalyst solution, has favorable voltage and power density characteristics, and in particular, has especially favorable voltage and power density characteristics in a high current density region, when compared to the membrane electrode assembly manufactured by a conventional system.

In more detail, since at least a portion of the solvent of the catalyst solution can be removed during the spraying because the preheating process is performed, catalyst material, having been dried to some extent, is coated on a surface of the high polymer electrolyte membrane or a gas diffusion layer. Accordingly, shrinkage of the high polymer electrolyte membrane or the gas diffusion layer due to the solvent can be decreased, so that the catalyst solution can be coated more uniformly. Furthermore, with the decrease in the amount of solvent, the phenomenon that the catalyst particles are closely banded together by the solvent is substantially decreased. In addition, if the dried catalyst particles are coated on the high polymer electrolyte membrane or the gas diffusion layer, a sufficient porosity among catalyst particles may exist so that material transfer characteristics can be improved. Still furthermore, since the dried catalyst material is sprayed on the gas diffusion layer, it can be minimized that the catalyst material is permeated into the gas diffusion layer together with the solvent so that the usability of the catalyst is increased and good voltage and power characteristics can be obtained.

The cathode catalyst solution spray nozzle 19 is installed to a transportation device 25, and the transportation device 25 transports the cathode catalyst solution spray nozzle 19 in at least one direction so that the cathode catalyst solution spray nozzle 19 can equally spray the cathode catalyst solution onto the high polymer electrolyte membrane 1. For such an operation of the transportation device 25, the transportation device 25 may be installed to a frame 23.

Similarly, the anode catalyst solution spray nozzle 21 is installed to a transportation device 29, and the transportation device 29 transports the anode catalyst solution spray nozzle 21 in at least one direction so that the anode catalyst solution spray nozzle 21 can equally spray the anode catalyst solution onto the high polymer electrolyte membrane 1. For such an operation of the transportation device 29, the transportation device 29 may be installed to a frame 27.

Operations of the transportation devices 25 and 29 can be controlled by a pre-inputted program, and a control unit (not shown) for storing and executing the pre-inputted program can be provided within the transportation devices 25 and 29 or can be provided outside the transportation devices 25 and 29.

In the embodiment of the present invention, the cathode and anode catalyst solution spray nozzles 19 and 21 operate to alternately spray the catalyst solution. Accordingly, while one of the cathode and anode catalyst solution spray nozzles 19 and 21 is spraying the catalyst solution, the other spray nozzle is dried by the preheated carrying gas. Therefore, the catalyst solution can be more effectively sprayed and the sprayed catalyst solution may form a uniform layer.

Such operations of the cathode and anode catalyst solution spray nozzles 19 and 21 can be controlled by a pre-inputted program, and a control unit for storing and executing the pre-inputted program can be provided within the cathode and anode catalyst solution spray nozzles 19 and 21 or can be provided outside the cathode and anode catalyst solution spray nozzles 19 and 21.

The control unit may include a microprocessor, a memory, and other necessary hardware and software components as will be understood by persons skilled in the art, to permit the control unit to execute the control function as described herein.

In addition, the control unit for controlling the transportation devices 25 and 29 and the control for controlling the cathode and anode catalyst solution spray nozzles 19 and 21 can be realized as a single unit.

Meanwhile, a method for manufacturing a membrane electrode assembly for a fuel cell according to an embodiment of the present invention can be performed by a system for manufacturing a membrane electrode assembly for a fuel cell according to an embodiment of the present invention.

The method for manufacturing the membrane electrode assembly according to an embodiment of the present invention includes preheating a cathode catalyst solution, preheating an anode catalyst solution, preheating a carrying gas, spraying the preheated cathode catalyst solution through a cathode catalyst solution spray nozzle using the preheated carrying gas, and spraying the preheated anode catalyst solution through an anode catalyst solution spray nozzle using the preheated carrying gas.

The spraying of the preheated cathode catalyst solution and the spraying of the preheated anode catalyst solution are alternately performed.

Throughout this specification and the claims which follow, unless explicitly described to the contrary, the word "comprise", or variations such as "comprises" or "comprising", will be understood to imply the inclusion of stated elements but not the exclusion of any other elements.

According to embodiments of the present invention, since the cathode catalyst solution, the anode catalyst solution, and the carrying gas are supplied to the spray nozzles after they are preheated, the catalyst layer can be formed more uniformly and a swelling phenomenon of the high polymer electrolyte membrane can be minimized. Moreover, since the spraying of the preheated cathode catalyst solution and the spraying of the preheated anode catalyst solution are alternately performed, the catalyst layer can be formed more uniformly.

## Claims

1. A system for manufacturing a membrane electrode assembly for a fuel cell comprising:
a catalyst solution preheating device preheating a cathode catalyst solution and an anode catalyst solution;
a carrying gas preheater preheating a carrying gas;
a cathode catalyst solution spray nozzle supplied with the cathode catalyst solution preheated by the catalyst solution preheating device and the carrying gas preheated by the carrying gas preheater and configured to spray the supplied cathode catalyst solution; and
an anode catalyst solution spray nozzle supplied with the anode catalyst solution preheated by the catalyst solution preheating device and the carrying gas preheated by the carrying gas preheater and configured to spray the supplied anode catalyst solution.

2. The system of claim 1, wherein the catalyst solution preheating device comprises:
a cathode catalyst solution preheater preheating the cathode catalyst solution; and
an anode catalyst solution preheater preheating the anode catalyst solution.

3. A method for manufacturing a membrane electrode assembly for a fuel cell comprising:
preheating a cathode catalyst solution;
preheating an anode catalyst solution;
preheating a carrying gas;
spraying the preheated cathode catalyst solution through a cathode catalyst solution spray nozzle using the preheated carrying gas; and
spraying the preheated anode catalyst solution through an anode catalyst solution spray nozzle using the preheated carrying gas.

4. The method of claim 3, wherein the spraying of the preheated cathode catalyst solution and the spraying of the preheated anode catalyst solution are alternately performed.

5. The method of claim 3, wherein in the preheating of the cathode catalyst solution, the cathode catalyst solution is heated at a temperature in a range of 0.6*BP to 0.95*BP, where BP is a boiling point of a solvent of the catalyst solution.

6. The method of claim 3, wherein in the preheating of the anode catalyst solution, the anode catalyst solution is heated at a temperature in a range of 0.6*BP to 0.95*BP, where BP is a boiling point of a solvent of the catalyst solution.

7. The method of claim 3, wherein in the preheating of the carrying gas, the carrying gas is heated at a temperature higher than the boiling points of the cathode catalyst solution and the anode catalyst solution.

## Patentansprüche

1. System zur Herstellung einer Membranelektrodenanordnung für eine Brennstoffzelle, wobei das System folgendes umfasst:
eine Katalysatorlösung-Vorwärmvorrichtung, die eine Kathodenkatalysatorlösung und eine Anodenkatalysatorlösung vorwärmt;
ein Trägergasvorwärmer, der ein Trägergas vorwärmt;
eine Kathodenkatalysatorlösung-Sprühdüse, die mit der Kathodenkatalysatorlösung, welche durch die Katalysatorlösung-Vorwärmvorrichtung vorgewärmt ist, und dem Trägergas, welches durch den Trägergasvorwärmer vorgewärmt ist, beschickt ist und zum Sprühen der beschickten Kathodenkatalysatorlösung konfiguriert ist; und
eine Anodenkatalysatorlösung-Sprühdüse, die mit der Anodenkatalysatorlösung, welche durch die Katalysatorlösung-Vorwärmvorrichtung vorgewärmt ist, und dem Trägergas, welches durch den Trägergasvorwärmer vorgewärmt ist, beschickt ist und zum Sprühen der beschickten Anodenkatalysatorlösung konfiguriert ist.

2. System gemäß Anspruch 1, worin die Katalysatorlösung-Vorwärmvorrichtung folgendes umfasst:
einen Kathodenkatalysatorlösungvorwärmer der die Kathodenkatalysatorlösung vorwärmt und
einen Anodenkatalysatorlösungvorwärmer der die Anodenkatalysatorlösung vorwärmt.

3. Verfahren zur Herstellung einer Membranelektrodenanordnung für eine Brennstoffzelle, wobei das Verfahren folgendes umfasst:
Vorwärmen einer Kathodenkatalysatorlösung;
Vorwärmen einer Anodenkatalysatorlösung;
Vorwärmen eines Trägergases;
Versprühen der vorgewärmten Kathodenkatalysatorlösung durch eine Kathodenkatalysatorlösung-Sprühdüse unter Verwendung des vorgewärmten Trägergases; und
Sprühen der vorgewärmten Anodenkatalysatorlösung durch eine Anodenkatalysatorlösung-Sprühdüse unter Verwendung des vorgewärmten Trägergases.

4. Verfahren gemäß Anspruch 3, wobei das Versprühen der vorgewärmten Kathodenkatalysatorlösung und das Versprühen der vorgewärmten Anodenkatalysatorlösung abwechselnd durchgeführt wird.

5. Verfahren gemäß Anspruch 3, wobei bei dem Vorwärmen der Kathodenkatalysatorlösung die Kathodenkatalysatorlösung auf eine Temperatur in einem Bereich von 0,6·BP bis 0,9·BP erwärmt wird, wobei BP ein Siedepunkt eines Lösungsmittels der Katalysatorlösung ist.

6. Verfahren gemäß Anspruch 3, wobei bei dem Vorwärmen der Anodenkatalysatorlösung die Anodenkatalysatorlösung auf eine Temperatur in einem Bereich von 0,6·BP bis 0,95·BP erwärmt wird, wobei BP ein Siedepunkt eines Lösungsmittels der Katalysatorlösung ist.

7. Verfahren gemäß Anspruch 3, wobei bei dem Vorwärmen des Trägergases das Trägergas auf eine höhere Temperatur als die Siedepunkte der Kathodenkatalysatorlösung und der Anodenkatalysatorlösung erwärmt wird.

## Revendications

1. Système pour fabriquer un ensemble d'électrodes à membrane pour une pile à combustible comprenant :
un dispositif de préchauffage de solution catalytique préchauffant une solution catalytique de cathode et une solution catalytique d'anode ;
un dispositif de préchauffage de gaz porteur préchauffant un gaz porteur ;
une buse de pulvérisation de solution catalytique de cathode alimentée par la solution catalytique de cathode préchauffée par le dispositif de préchauffage de solution catalytique et le gaz porteur préchauffé par le dispositif de préchauffage de gaz porteur et configurée pour pulvériser la solution catalytique de cathode fournie ; et
une buse de pulvérisation de solution catalytique d'anode alimentée par la solution catalytique d'anode préchauffée par le dispositif de préchauffage de solution catalytique et le gaz porteur préchauffé par le dispositif de préchauffage de gaz porteur et configurée pour pulvériser la solution catalytique d'anode fournie.

2. Système selon la revendication 1, dans lequel le dispositif de préchauffage de solution catalytique comprend :
un dispositif de préchauffage de solution catalytique de cathode préchauffant la solution catalytique de cathode ; et
un dispositif de préchauffage de solution catalytique d'anode préchauffant la solution catalytique d'anode.

3. Procédé pour fabriquer un ensemble d'électrodes à membrane pour une pile à combustible comprenant :
le préchauffage d'une solution catalytique de cathode ;
le préchauffage d'une solution catalytique d'anode ;
le préchauffage d'un gaz porteur ;
la pulvérisation de la solution catalytique de cathode préchauffée par l'intermédiaire d'une buse de pulvérisation de solution catalytique de cathode en utilisant le gaz porteur préchauffé ; et
la pulvérisation de la solution catalytique d'anode préchauffée par l'intermédiaire d'une buse de pulvérisation de solution catalytique d'anode en utilisant le gaz porteur préchauffé.

4. Procédé selon la revendication 3, dans lequel la pulvérisation de la solution catalytique de cathode préchauffée et la pulvérisation de la solution catalytique d'anode préchauffée sont effectuées en alternance.

5. Procédé selon la revendication 3, dans lequel dans le préchauffage de la solution catalytique de cathode, la solution catalytique de cathode est chauffée à une température dans une plage de 0,6*BP à 0,95*BP, où BP est un point d'ébullition d'un solvant de la solution catalytique.

6. Procédé selon la revendication 3, dans lequel dans le préchauffage de la solution catalytique d'anode, la solution catalytique d'anode est chauffée à une température dans une plage de 0,6*BP à 0,95*BP, où BP est un point d'ébullition d'un solvant de la solution catalytique.

7. Procédé selon la revendication 3, dans lequel dans le préchauffage du gaz porteur, le gaz porteur est chauffé à une température plus élevée que les points d'ébullition de la solution catalytique de cathode et de la solution catalytique d'anode.
